# EUROPÄISCHE PATENTSCHRIFT

(11) **EP 0 331 869 B1**
(45) Veröffentlichungstag und Bekanntmachung des Hinweises auf die Patenterteilung: **13.04.1994**
(21) Anmeldenummer: 89100364.2
(22) Anmeldetag: 11.01.1989
(51) Int. Cl.: B23F 23/12, B23F 5/12

(54) **Einrichtung zur Steuerung der Werkzeugstellung in Abhängigkeit von der Hubposition**
Device for controlling a tool's position in dependence upon the stroke position
Dispositif pour la commande de la position d'outil en fonction de la position de la course

(30) Priorität: 08.03.1988 CH 857/88
(43) Veröffentlichungstag der Anmeldung: 13.09.1989
(73) Patentinhaber: MASCHINENFABRIK LORENZ GmbH, D-76275 Ettlingen (DE)
(72) Erfinder: Seiberlich, Walter, D-7505 Ettlingen (DE)
(74) Vertreter: Lichti, Heiner, Dipl.-Ing.

(56) Entgegenhaltungen:
- EP-A- 0 135 064
- DE-A- 1 078 851
- DE-A- 1 228 891
- DE-A- 1 552 769
- GB-A- 587 697
- US-A- 3 318 194
- US-A- 4 467 568
- PATENT ABSTRACTS OF JAPAN vol. 8, no. 234 (M-334)(1671)26. Oktober 1984 & JP-A-59 115 112 ( TOYOTA JIDOSHA K.K. ) 3. Juli 1984& JP-A-59 115 112

## Beschreibung

Die Erfindung bezieht sich auf eine Einrichtung an einer Zahnradstoßmaschine zur Steuerung der Stellung des Schneidrades in Abhängigkeit von dessen Hubposition gemäß Oberbegriff des Anspruchs 1.

Bisher wurde die Steuerung der Schneidradstellung unter anderem mit einer Abhebeeinrichtung für das Schneidrad gemäß der DE-C 21 48 801 durchgeführt, die ein Steuergetriebe mit einer rechtwinklig zur Hubrichtung gegen eine Federkraft in zwei wahlweise entgegengesetzte Abheberichtungen wirkende und mit Bezug auf die Phasenlage des Hubantriebs einstellbaren Steuerkurve aufweist, die ihrerseits auf einer im Maschinengestell verdrehbaren und feststellbaren Exzenterwelle gelagert ist und unmittelbar auf eine von zwei an der Schneidradspindelführung ausgebildete Abheberollen wirkt. Die Federkraft wird von paarweise gegenüberliegenden, den Abheberollen wirkungsmäßig zugeordneten Druckfedern an der Schneidradspindelführung gebildet, die jeweils an einer am Maschinengestell verstellbaren Abstützung anliegen.

Nachteilig an dieser bekannten Einrichtung ist, daß der Abhebeweg nicht verändert werden kann, ohne die Steuerkurve zu wechseln. Dies ist insbesondere deshalb bedeutungsvoll, weil für die Schlichtbearbeitung ein kleinerer Abhebeweg als für die Schruppbearbeitung erforderlich ist.

Außerdem ist eine Korrektur der Werte für die Erzeugung von Konizität und/oder Balligkeit für die herzustellende Verzahnung zufolge der Werkzeugnachschärfung erforderlich. Bei der bekannten Maschine ist diese Korrektur einerseits nur in engen Grenzen möglich und andererseits sehr umständlich sowie nicht bei allen Verzahnungen realisierbar.

Außerdem ist nachteilig, daß aufgrund der direkten Lagefixierung des Werkzeugträgerkopfes während des Arbeitshubs durch die Anlage der Abheberolle an der Steuerkurve große Punktlasten auftreten, die einen erhöhten Verschleiß in einem kleinen Bereich der Steuerkurve bewirken und schwankende Fertigungsqualität zur Folge haben können. Daher muß die Steuerkurve bei direktem Bewegungsabgriff häufiger ausgewechselt werden, was einerseits Stillstandszeiten der Maschine und gegebenenfalls einer ganzen Fertigungsstraße, andererseits Ersatzteilhaltung und Wartungsaufwand mit sich bringt.

Darüber hinaus lassen sich mit der bekannten Einrichtung nur in sehr begrenztem Umfang Korrekturen der geometrischen Form der Zahnflanke herstellen.

Im wesentlichen die gleichen Nachteile weist eine andere bekannte Einrichtung auf (DE-C 708 759), bei der die Steuerkurve auf einen im Werkzeugträgerkopf geführten Kulissenstein wirkt und vom Werkzeugträgerschlitten über eine Zahnstange und eine Art Kniehebelgetriebe in eine oszillierende Drehbewegung versetzt wird.

Es ist daher ausgehend vom Stand der Technik gemäß DE-C 2 148 801 Aufgabe der Erfindung, eine Einrichtung zu schaffen, die eine sehr steife Steuerung des Schneidrades entlang einer vorgebbaren Bearbeitungsbahn ermöglicht und auch zur Herstellung von Zahnflankenkorrekturen geeignet ist, wobei sehr enge Fertigungstoleranzen eingehalten werden können, also sehr hohe Produktqualität erzielbar ist.

Diese Aufgabe wird an einer Einrichtung gemäß Oberbegriff von Anspruch 1 erfindungsgemäß durch die kennzeichnenden Merkmale des Anspruchs 1 gelöst. Vorteilhafte Ausführungsformen dieser Lösung sind in den Ansprüchen 2 bis 30 gekennzeichnet.

Weitere Einzelheiten und Vorteile ergeben sich aus der Beschreibung von Ausführungsbeispielen der Erfindung anhand der Zeichnung. In dieser zeigt
Fig 1 eine erste Ausführungsform schematischer in Seitenansicht als Schemadarstellung mit einer ersten Ausführung der Verstelleinrichtung;
Fig 2 die Ausführungsform nach Fig. 1 in Ansicht von oben mit einer abgewandelten Verstelleinrichtung;
Fig 3 die Ausführungsform gemäß Fig. 1 in schematischer räumlicher Darstellung;
Fig 4 eine zweite Ausführungsform in schematischer räumlicher Darstellung;
Fig 5 eine dritte Ausführungsform in schematischer räumlicher Darstellung;
Fig 6 eine vierte Ausführungsform in schematischer räumlicher Darstellung;
Fig 7 eine fünfte Ausführungsform in schematischer räumlicher Darstellung mit getrennter Abhebe- und Korrekturkurve;
Fig 8 eine sechste gegenüber Fig. 7 abgewandelte Ausführungsform in schematischer räumlicher Darstellung;
Fig 9 eine siebente Ausführungsform in schematischer räumlicher Darstellung mit getrennter Abhebe-und Korrekturkurve zur steuerbaren Ueberlagerung von Abhebung und Korrektur;
Fig. 10 eine achte gegenüber Fig. 9 abgewandelte Aufsführungsform in schematischer räumlicher Darstellung;
Fig. 11 Details zu einer Ausführungsform im Schnitt
An einer Zahnrad-Stossmaschine ist über einem Aufspanntisch (nicht dargestellt) für das Werkstück (nicht dargestellt) ein Werkzeugträgerkopf 1 mit einem auf einer Werzeugspindel 3 sitzenden Schneidrad 2 angeordnet und auf dem Maschinengestell relativ zu diesem schwenkbar abgestützt. Für die Festlegung der Schwenklage des Werkzeugträgerkopfes 1 ist eine Einrichtung 4 vorgesehen, welche im wesentlichen die dynamische Positionierung der Schneidkante während dem Arbeitshub und dem Leerhub steuert.

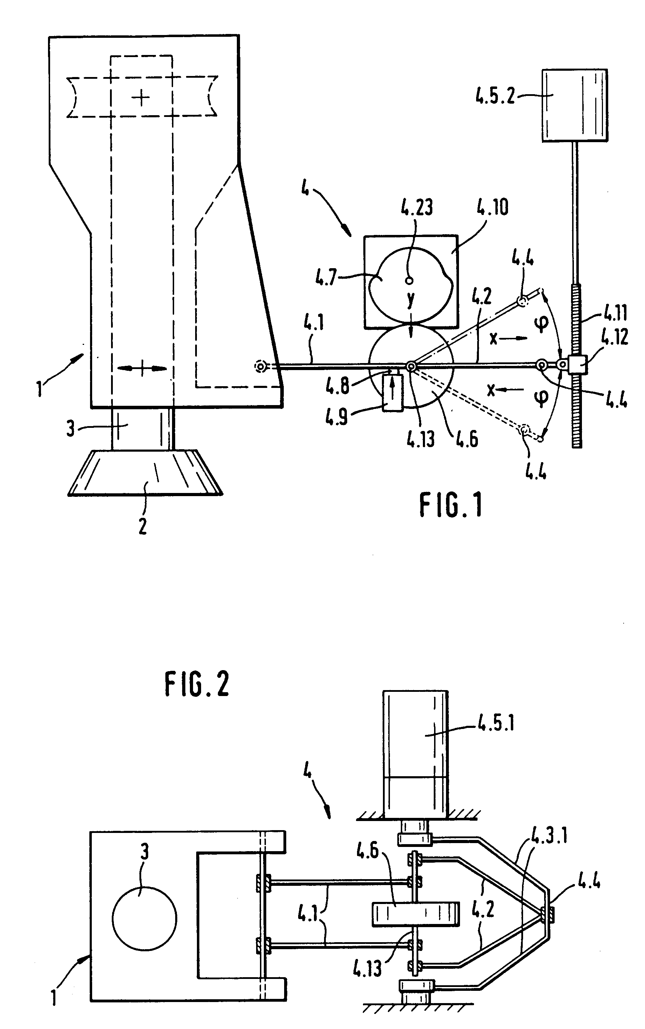

Eine erste Variante (Fig. 1, 2, 3, 11) dieser Einrichtung 4 weist ein als Kniehebelgetriebe 4.1, 4.2 ausgebildetes Steuergetriebe auf, welches einen ersten, am Werkzeugträgerkopf 1 angelenkten Kniehebel 4.1 enthält, an dem ein zweiter Kniehebel 4.2 angelenkt ist, der seinerseits mit einer einen Steuermotor 4.5.2 aufweisenden Verstelleinrichtung 4.11, 4.12 zur feststellbaren Verlagerung der Kniehebel-Getriebeachse 4.4 zur Wahl der Abheberichtung und/oder der Abhebegrösse verbunden ist.

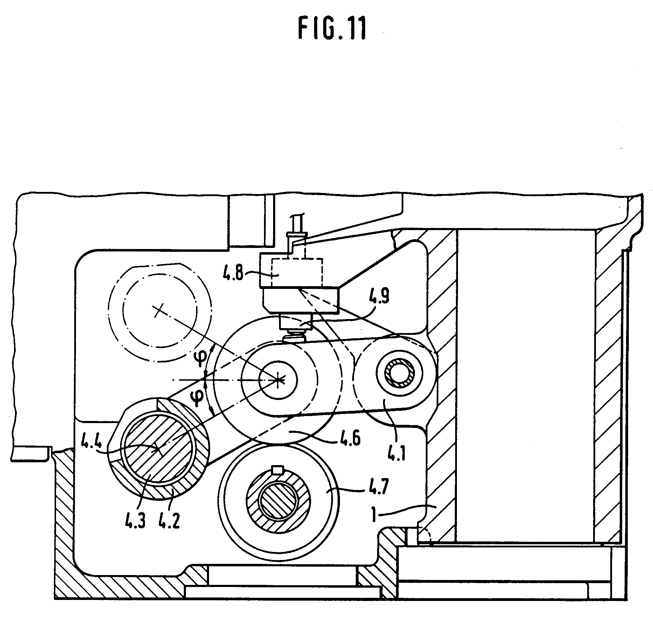

Dabei wird die Abhebegrösse vom Betrag des Auslenkwinkels φ und die Abheberichtung vom Vorzeichen desselben bestimmt. Liegt die Getriebeachse 4.4 am zweiten Kniehebel 4.2 - entsprechend bezogen auf die Fig. 1 bzw. 11 - unterhalb der waagrechten Symmetrieebene, dann ergibt dies eine erste Abheberichtung, und liegt diese Getriebeachse 4.4 am zweiten Kniehebel 4.2 oberhalb der waagrechten Symmetrieebene, dann ergibt dies eine zweite Abheberichtung.

Auf der gemeinsamen Gelenkachse 4.13 der beiden Kniehebel 4.1 und 4.2, welche als gerade Achse ausgebildet ist, ist eine freilaufende Abheberolle 4.6 gelagert, die an einer Steuerkurve 4.7 dauernd anliegt. Dazu ist eine Andrückvorrichtung 4.9 vorgesehen, welche ein einstellbares, mechanisch, hydraulisch oder pneumatisch wirkendes federelastisches Element (nicht dargestellt) aufweist, das über einen Stempel k4.8 am ersten Kniehebel 4.1 angreift. Die Steuerkurve 4.7 sitzt auf einer Steuernockenwelle 4.23, welche mit einer Antriebseinrichtung 4.10, z.B. einem Motor oder dergleichen, verbunden ist.

Die Verstelleinrichtung weist einen Steuermotor 4.5.2 auf, der mit einer Schraubenspindel 4.11 verbunden ist, deren Mutter 4.12 am zweiten Kniehebel 4.2 angreift. Eine zweite Ausführungsform der Verstelleinrichtung weist eine an der Stossmaschine gelagerte, verschwenkbare Kurbel 4.3.1.auf, derren Kurbelzapfen den zweiten Kniehebel 4.2 mit einem Lager trägt und deren Welle koaxial zur Abbheberolle 4.6 seitlich von dieser gelagert und mit dem Steuermotor 4.5.1 verbunden ist.

Die Wirkungsweise der ersten Variante der Einrichtung ergibt sich im Zusammenhang mit den Fig. 1, 2, 11 wie folgt: Die Abhebe- oder Steuerbewegung des Werkzeugträgerkopfes 1 wird in Abhängigkeit von der Hubposition des Werkzeuges 2 via elektri sche Mittel oder mechanische Getriebezüge (nicht dargestellt und an sich bekannt), welche den Hubantrieb und die Einrichtung 4 koppeln, vorgenommen. Für einen bestimmten Grundabhebebetrag und eine Abheberichtung wird der zweite Kniehebel 4.2 mit seiner Getriebeachse 4.4 in eine vorgewählte Position ober- oder unterhalb der Strecklage der Kniehebel 4.1, 4.2 (Fig. 1) gebracht und verriegelt. Auf der Steuernockenwelle ist eine ausgewählte Steuerkurve 4.7 montiert. Nach den üblichen Einstellarbeiten bei Arbeitsbeginn an einem Werkstück wird die Steuerkurve 4.7 in Abhängigkeit von der Hubbewegung des Werkzeugträgerkopfes 1 gedreht und je nach der auf ihr angeordneten Kurvenform wird die Gelenkachse 4.13 der beiden Kniehebel 4.1 und 4.2 über die Abheberolle 4.6 entsprechend bewegt und diese Bewegung auf den Werkzeugträgerkopf 1 übertragen. Je nach Kurvenform der Steuerkurve 4.7 erfolgt der Bewegungsverlauf entlang der Hublänge, wird also die Abhebe- oder Bearbeitungslinie bestimmt, wodurch z.B. Balligkeit eines Profils oder ein sonstwie vorgegebener Profilverlauf entlang der Hublänge erzielbar ist. Wird der Grundabhebebetrag mit der Verstelleinrichtung 4.3.1 und deren Steuermotor 4.5.1 verstellt nach Grösse und Richtung, d.h. wird der Winkel φ verändert, dann ergibt sich am Werkzeugträgerkopf 1 eine andere Lage der Abhebe- oder Bearbeitungslinie. Deren Verlauf hängt wiederum von der Kurvenform der Steuerkurve 4.7 ab.

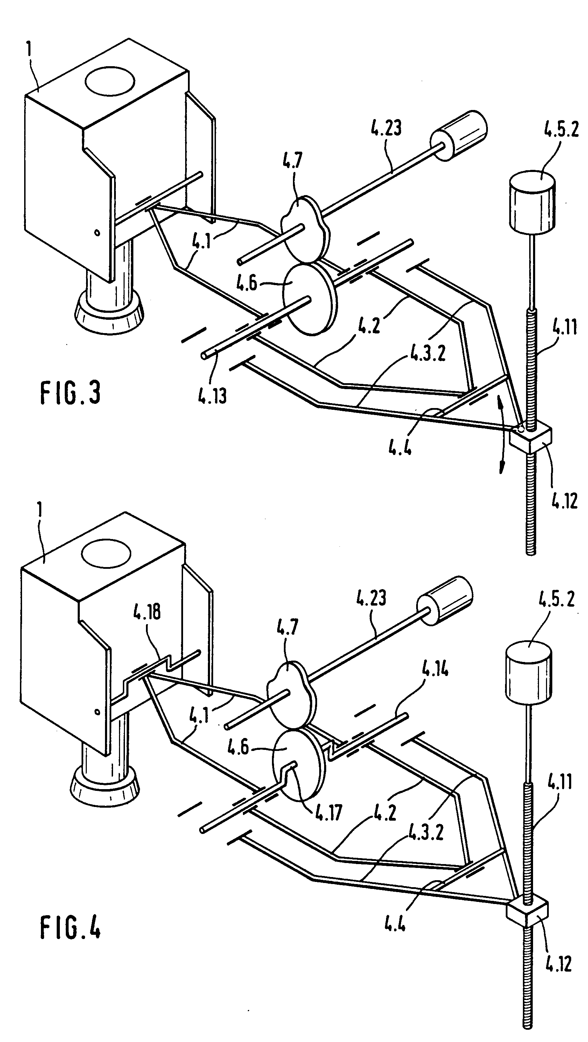

Eine zweite Variante der Einrichtung 4 (Fig. 4) weist der Kniehebelgetriebe 4.1, 4.2 auf, welches einen ersten, am Werkzeugträgerkopf 1 angelenkten Kniehebel 4.1 enthält, an dem ein zweiter Kniehebel 4.2 angelenkt ist, der seinerseits mit einer einen Steuermotor 4.5.2 aufweisenden Verstelleinrich tung 4.3.2 zur feststellbaren Verlagerung der Getriebeachse 4.4 zur Wahl der Abheberichtung und/oder des Abhebewegs verbunden ist.

Dabei wird der Abhebeweg vom Betrag des Auslenkwinkels φ und die Abheberichtung vom Vorzeichen desselben bestimmt. Liegt die Getriebeachse 4.4 am zweiten Kniehebel 4.2 unterhalb der der Strecklage der Kniehebel, ergibt dies eine erste Abheberichtung, und liegt diese Getriebeachse 4.4 oberhalb der Strecklage, dann ergibt dies eine zweite Abheberichtung bei gleicher Steuerkurve 4.7.

Die gemeinsame Gelenkachse 4.14, der beiden Kniehebel 4.1 und 4.2, ist bei dieser Ausführung als Kurbelachse ausgebildet, welche auf ihrem Kurbelzapfen 4.17 die Abheberolle 4.6 trägt, die mit der antreibbaren Steuernecke 4.7 zusammenarbeitet. Ausserdem ist eine Andrückvorrichtung 4.8 (nicht dargestellt in Fig. 4) wie bei der ersten Variante der Einrichtung 4 vorgesehen, welche die Abheberolle 4.6 und die Steuerkurve 4.7 in ständiger Anlage aneinander hält.

Anstelle einer Kurbelachse 4.14 kann auch ein Abheberollenexzenter (nicht dargestellt) vorgesehen sein, auf dem die Abheberolle 4.6 drehbar gelagert ist. Dieser Abheberollenexzenter kann seinerseits verstellbar, insbesondere geregelt oder gesteuert verstellbar, sein.

Durch die Kurbel- oder Exzenterexzentrizität kann die Abheberolle 4.6 verstellt werden, wodurch eine einer Veränderung der Steuerkurve 4.7 äquivalente Wirkung, nämlich den Flankenlinienverlauf zu verändern, erzielt wird, mit dem Vorteil, dass die Steuerkurve 4.7 nicht ausgewechselt und eine andere eingebaut werden muss. Ausserdem ist diese Veränderung bei Betrieb der Maschine möglich. Zusätzlich ist der erste Kniehebel 4.1 auf einer verstellbaren Kurbel 4.18 mit seinem einen Ende gelagert. Dadurch ist es möglich, den Flankenlinienverlauf zusätzlich zu beeinflussen, ohne Teile, z.B. die Steuerkurve 4.7 wechseln zu müssen. Mit einer (nicht dargestellten) motorischen und steuerbaren oder manuellen Verstellung kann die jeweilige Lage des Werkzeugträgerkopfes 1 und damit des Arbeitsbereichs des Schneidrades gegenüber dem Werkstück für jede Arbeits- und Rücklaufstellung zusätzlich zur Hebel- und Steuerkurvenverstellung beeinflusst werden.

Wie bei der ersten Variante erfolgt auch bei der zweiten Variante die Einstellung eines vorwählbaren Grundabhebebetrages und einer Abheberichtung durch Positionierung der Getriebeachse 4.4 des Kniehebelgetriebes und dessen Verriegelung. Auch der Antrieb und die Wirkungsweise der Steuerkurve 4.7 ist gleich wie bei der ersten Variante. Zusätzlich zum Grundabhebebetrag nach Grösse und Richtung sowie dem Verlauf des Abhebebewegung entlang der Hublänge, der durch die Form der Steuerkurve 4.7 bestimmt ist, ist dieser Verlauf durch die als Kurbelachse ausgebildete Gelenkachse 4.14 veränderbar, indem diese Kurbelachse verdreht wird, womit eine Verlagerung des Drehpunktes der Abheberolle 4.6 auf der Kurbelachse erfolgt. Eine solche Verdrehung kann auch während des Betriebs der Maschine und geregelt in Abhängigkeit von der den anderen Maschinenfunktionen vorgenommen werden. Ausserdem kann bei dieser Variante eine zusätzliche Aenderung des Verlaufs der Abhebebewegung entlang der Hublänge durch eine am Werkzeugträgerkopf 1 angeordnete drehbare Kurbel 4.18, welche manuell oder in Abhängigkeit von den entsprechenden anderen Maschinenfunktionen geregelt verstellbar ist, vorgenommen werden. Je nach gewünschtem Bearbeitungslinien- bzw. Abhebebewegungsverlauf werden die diese beeinflussenden Mittel, nämlich die Steuerkurve 4.7, der Winkel φ der Stellung des Kniehebels 4.2, die Stellung der Kurbelachse 4.14 und/oder die Stellung der Kurbel 4.18, verstellt.

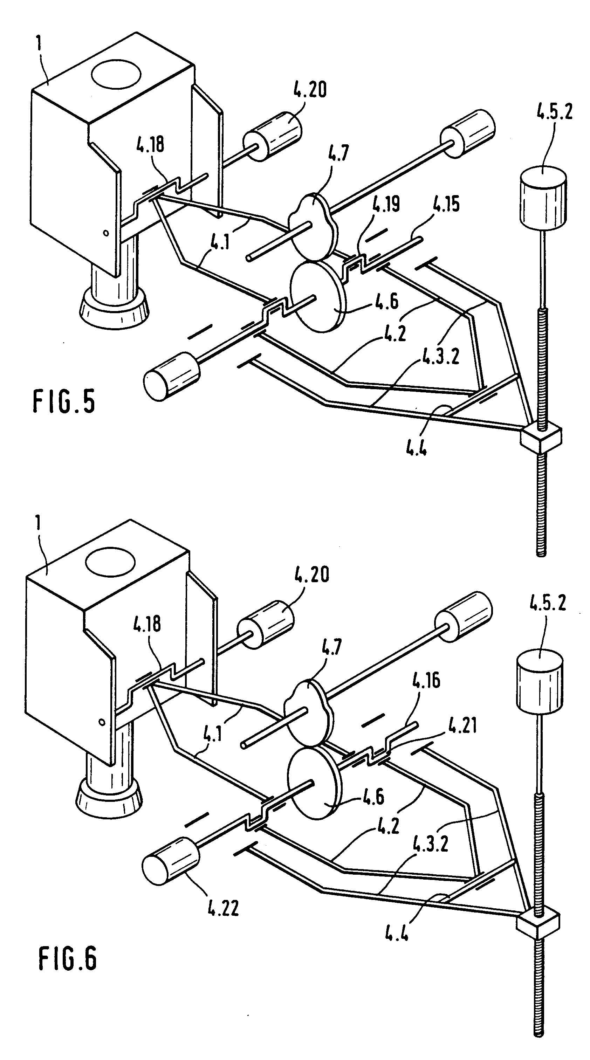

Eine dritte Variante der Einrichtung 4 (Fig. 5) weist ein Kniehebelgetriebe 4.1, 4.2 auf, welches einen ersten, am Werkzeugträgerkopf 1 angelenkten Kniehebel 4.1 enthält, an dem ein zweiter Kniehebel 4.2 angelenkt ist, der seinerseits mit einer einen Steuermotor 4.5.2 aufweisenden Verstelleinrichtung 4.3.2 zur feststellbaren Verlagerung der Getriebeachse 4.4 zur Wahl der Abheberichtung und/oder des Abhebewegs verbunden ist.

Dabei wird der Abhebeweg vom Betrag des Auslenkwinkels φ und die Abheberichtung vom Vorzeichen desselben bestimmt. Liegt die Getriebeachse 4.4 am zweiten Kniehebel 4.2 unterhalb der Strecklage, dann ergibt dies eine erste Abheberichtung, liegt sie oberhalb der Strecklage, dann ergibt dies eine zweite Abheberichtung bei gleicher Steuerkurve 4.7.

Die Gelenkachse 4.15 ist als Doppelkurbelachse 1. Art ausgebildet, an welcher an den beiden Kurbelzapfen 4.19 der erste Kniehebel 4.1 angelenkt ist.

Auf den Wellenteilen neben den Kurbelzapfen ist der zweite Kniehebel 4.2 und zwischen den Kurbelzapfen ist die Abheberolle 4.6 gelagert, welche mit der Steuerkurve 4.7 zusammenarbeitet, wobei eine Andrückvorrichtung 4.8 (nicht dargestellt in Fig. 5) wie bei der ersten Variante der Einrichtung 4 vorgesehen ist, welche die Abheberolle 4.6 und die Steuerkurve 4.7 in ständiger Anlage aneinander hält.

Anstelle der Kurbelachse 4.15 können auch Exzenter für die Lagerung des zweiten Kniehebelarmes 4.2 auf der gemeinsamen Gelenkachse 4.15 vorgesehen sein. Diese können auch gesteuert motorisch verstellbar ausgebildet sein.

Durch die Kurbel- oder Exzenterexzentrizität kann der Steuerkurve 4.7 eine andere wirksame Form gegeben werden. In gleicher Weise wirkt eine am Werkzeugträgerkopf 1 angeordnete, verstellbare Kurbel 4.18, an der am Kurbelzapfen der erste Kniehebel 4.1 angelenkt ist. Dieser Kurbelzapfen kann auch als Exzenter ausgebildet, und sowohl Kurbelzapfen oder Exzenter können an eine gegebenenfalls automatische Verstellvorrichtung 4.20 am Werkzeugträgerkopf 1 angeschlossen sein. Auch dadurch kann der Flankenlinienverlauf, wie mit den Exzentern der Doppelkurbelachse 4.15,und zusätzlich zu diesen, beeinflusst werden; ohne die Maschine abstellen oder Demontage- und Montagearbeiten ausführen zu müssen.

Die Wirkungsweise der dritten Variante der Einrichtung (Fig. 5) entspricht wieder im wesentlichen der ersten Variante, wobei in Abänderung die beiden Kniehebel 4.1 bzw. 4.2 an einer Doppelkurbelachse 4.15 angreifen, welche manuell oder geregelt motorisch verdrehbar ist, wodurch, wie bei der zweiten Variante der Einrichtung, eine der von der Steuerkurve 4.7 herrührende Bewegung überlagerte Bewegung erzeugt wird. Für eine weitere Modifikation der Bearbeitungslinie bzw. Abhebebewegung kann die am Werkzeugträgerkopf 1 angeordnete verstellbare Kurbel 4.18 in Abstimmung auf die Steuerkurve 4.7, die Verstellung der Doppelkurbelachse 4.15 sowie der eingestellten Werte für den Grundabhebebetrag geregelt motorisch verdreht werden.

Eine vierte Variante der Einrichtung 4 (Fig. 6) weist ein Kniehebelgetriebe 4.1, 4.2 auf, welches einen ersten, am Werkzeugträgerkopf 1 angelenkten Kniehebel 4.1 enthält, an dem ein zweiter Kniehebel 4.2 angelenkt ist, der seinerseits mit einer einen Steuermotor 4.5.2 aufweisenden Verstelleinrichtung 4.3.2 zur feststellbaren Verlagerung der Getriebeachse 4.4 zur Wahl der Abheberichtung und/oder des Abhebewegs verbunden ist.

Die gemeinsame Gelenkachse 4.16 ist als Doppelkurbelachse ausgebildet, welche mit ihrer normalen Achse den ersten Kniehebel 4.1 lagert und die Abheberolle 4.6 trägt und an deren Kurbelzapfen 4.21 der Kniehebel 4.2 angelenkt ist. Statt der Kurbelzapfen 4.21 können auch Exzenter vorgesehen sein, welche, wie die Kurbelzapfen, an eine motorische und steuerbare oder manuelle Verstelleinrichtung 4.22 angeschlossen sind, welche eine automatische bzw. manuelle Verstellung der Exzentrizitätslage und/oder der Exzentrizität ermöglicht, um den Flankenlinienverlauf des Werkstückes ohne Demontage der Steuerkurve 4.7 zu verändern. Ebenfalls zur Veränderung des Flankenlinienverlaufs des Werkstückes während des Bearbeitungsvorganges, ist eine verstellbare Kurbel 4.18 am Werkzeugträgerkopf 1 vorgesehen, an deren Kurbelzapfen der erste Kniehebel 4.1 angelenkt ist. Auch mit einer Verstellung dieser Kurbel 4.18 lässt sich der Flankenlinienverlauf des Werkstückes und der Rücklaufweg beeinflussen.

Die bei den genannten Varianten verwendeten Steuerkurven 4.7 können entweder Kreisform oder eine hievon, beliebig abweichende Fom oder eine aus einer Steuerkurve für die Schneidradabhebung und aus einer dieser überlagerten Steuerkurve zur Erzeugung eines bestimmbaren Bearbeitungslinienverlaufes aufweisen.

Es ist aber auch möglich, dass die Steuerkurve 4.7 mit der Schneidradabhebesteuerkurve auf wenigstens einem verstellbaren Nockenexzenter (nicht dargestellt) zur von der Schneidradabhebesteuerkurve getrennten Einstellung des Bearbeitungslinien -bzw. Flankenlinienverlaufes und des Rückhubverlaufes gelagert ist. Dieser Nockenexzenter kann mit einer Steuerantriebseinrichtung (nicht dargestellt) zur Führung des Schneidrades entlang einer vorgebbaren Bearbeitungslinie verbunden sein.

Die Wirkungsweise der vierten Variante der Einrichtung (Fig. 6) entspricht im wesentlichen der Wirkungsweise der dritten Variante (Fig. 5), wobei die zusätzlich zur Steuerkurve 4.7 und der verstellbaren Kurbel 4.18 wirksame Verstellung durch eine Verschwenkung der Doppelkurbelachse 2. Art 4.16, welche die abheberollenseitige Achse des Kniehebels 4.2 anstatt der des Kniehebels 4.1 verlagert, vorgenommen wird.

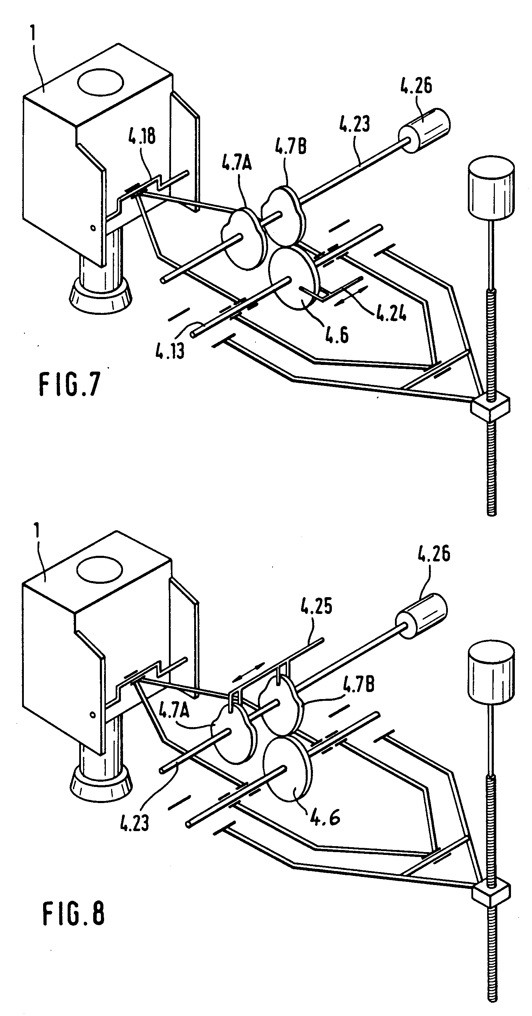

Bei einer fünften Variante der Einrichtung 4 (Fig. 7) sind zwei Steuerkurven 4.7A bzw. 4.7B auf einer Welle 4.23, welche mit einer steuerbaren Antriebseinrichtung 4.26 verbunden ist, angeordnet. Die gegenüber diesen Steuerkurven 4.7A und 4.7B auf der gemeinsamen Gelenkachse 4.13 sitzende Abheberolle 4.6 ist verschiebbar, aber festklemmbar gelagert, sodass diese einmal mit der einen Steuerkurve 4.7A oder mit der anderen Steuerkurve 4.7B in Eingriff steht. Für diese Verschiebung ist eine Verschiebeeinrichtung 4.24 vorgesehen, welche mit einem gesteuerten motorischen Antrieb (nicht dargestellt) verbunden ist. Die beiden Steuerkurven weisen verschiedene Form auf, sodass zwei unterschiedliche Flankenlinien herstellbar sind, welche mit den von den anderen Varianten bekannten Verstellmöglichkeiten, sofern diese in einer Ausführungsform ganz oder teilweise kombiniert werden, eine grosse und relativ fein abgestufte Anzahl von Modifikationen der Flankenlinien ermöglichen. Die Anordnung der anderen Bauteile, wie der Kniehebel 4.1, 4.2, der Andrückvorrichtung 4.8 usw. ist in der Variante nach Fig. 7 entsprechend der ersten Variante (Fig. 1, 2, 3, 11) unter Einbezug einer verstellbaren Kurbel 4.18 am Werkzeugträgerkopf 1 ausgebildet.

Die Wirkungsweise der fünften Variante der Einrichtung (Fig. 7) entspricht im wesentlichen der Wirkungsweise der ersten Variante (Fig. 1, 2, 3, 11), wobei zur Vermeidung von Demontage- und Montagearbeiten wenigstens zwei Steuerkurven 4.7 auf der Welle 4.23 angeordnet sind. Durch eine axiale Verschiebung der Abheberolle 4.6 wird diese mit je einer der Steuerkurven 4.7 in Kontakt gebracht, sodass diese Paarung zusammenarbeiten kann. Am Werkzeugträgerkopf 1 ist wie bei der zweiten, dritten oder vierten Variante eine verstellbare Kurbel 4.18 vorgesehen, die zur zusätzlichen Modifikation der Bearbeitungs- oder Abhebelinie in Ueberlagerung mit der Steuerkurve 4.7 und der Einstellung des Grundabhebebetrages wirkt.

Bei der sechsten Variante (Fig. 8) der Einrichtung 4 ist in Abwandlung der Ausführungsform nach Fig. 7 die Abheberolle 4.6 auf der gemeinsamen Gelenkachse 4.13 frei drehbar, aber unverschiebbar gelagert. Auf einer Welle 4.23 sind zwei Steuerkurven 4.7A, 4.7B drehmomentfest, aber verschiebbar angeordnet und von einer mit der Welle 4.23 verbundenen Antriebseinrichtung 4.26 drehbar. Eine Verschiebeeinrichtung 4.25 ist manuell oder motorisch angetrieben (nicht dargestellt) zur axialen Verschiebung der beiden Steuerkurven 4.7A, 4.7B eingerichtet, wobei diese in Wirkverbindung mit der Abheberolle 4.6 bringbar sind. Die anderen Bauteile der Einrichtung 4 sind wieder nach der Variante gemäss Fig. 7 angeordnet.

Die Wirkungsweise der sechsten Variante der Einrichtung (Fig. 8) entspricht der Wirkungsweise der fünften Variante (Fig. 7), mit dem Unterschied, dass nicht die Abheberolle 4.6 sondern die Steuerkurven 4.7 oder die Welle 4.23 axial verschiebbar ist, um die verschiedenen Steuerkurven 4.7 mit der Abheberolle 4.6 zusammenarbeiten zu lassen, wenn der Bearbeitungs-und/oder Abhebebewegungsverlauf geändert werden soll. Dabei kann diese axiale Verschiebung in Abhängigkeit der Steuerung der anderen Funktionen der Maschine mittels der Antriebseinrichtung 4.26 erfolgen.

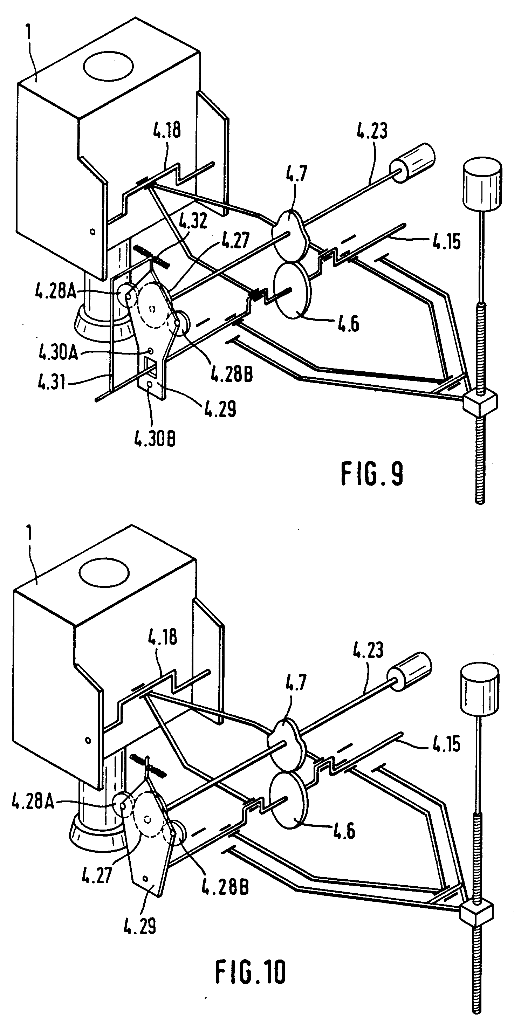

Bei der siebenten Variante (Fig. 9) der Einrichtung 4 ist der grundsätzliche Aufbau nach der dritten Variante (Fig. 5) gewählt, wobei als Verstelleinrichtung 4.22 für die Kurbelachsen 4.15 oder 4.16 eine Substeuernocke 4.27 auf der Welle 4.23 angeordnet ist und mit zwei Abgriffsrollen 4.28A bzw. 4.28B zusammenwirkt, welche in einer, im wesenlichen einen zweiteiligen Wippenkörper aufweisenden, Uebertragungswippe 4.29 gelagert sind, von welchen der eine zwei wahlweise zu verwendende Schwenkachsen 4.30A bzw. 4.30B aufweist. Von diesen Schwenkachsen liegt die eine in kleinerem Abstand zur Welle 4.23 als die andere, um das Uebersetzungsverhältnis zwischen der Substeuernocke 4.27 und der Verschwenkbewegung der gemeinsamen Kurbelachse 4.15 oder 4.16 der beiden Kniehebel 4.1 bzw. 4.2 veränderbar zu machen. Mit dem einen Teil der Uebertragungswippe 4.29 verbunden ist der als Uebertragungshebel 4.31 ausgebildete zweite Teil der mit der gemeinsamen Achse 4.15 oder 4.16 drehfest verbunden ist, um die der Kurvenform der Substeuernocke 4.27 entsprechende Bewegung der Uebertragungswippe 4.29 auf die gemeinsame Kurbelachse 4.15 oder 4.16 zu übertragen und so die wirksamen Drehachsen der beiden Kniehebel 4.1 und 4.2 zueinander zu verlagern. Damit kann, wie bei den anderen Varianten angegeben, der Werkzeugträgerkopf 1 verstellt und so der Flankenlinienverlauf und auch der Verlauf des Rückhubes im Zusammenwirken mit den anderen Verstelleinrichtungen verändert werden. Dies, bei entsprechend gesteuertem motorischem Antrieb, während des Arbeitshubs oder Rückhubs, wobei auch eine Aenderung von Hub zu Hub einstellbar ist. Dabei dient die eine Abgriffsrolle für die Herstellung eines Innenprofils und die andere Abgriffsrolle für die Herstellung eines Aussenprofils. Damit jeweils eine der beiden Abgriffsrollen 4.28A oder 4.28B an der Substeuernocke 4.27 anliegt, ist eine federbelastete Einstelleinrichtung 4.32 vorgesehen und in Wirkverbindung mit der Uebertragungswippe 4.29.

Diese Verstelleinrichtung 4.22 ist aber auch mit einer der vorgenannten Varianten 2-4 kombinierbar. Auch kann die von der Substeuernocke 4.27 abgegriffene Bewegung über den Uebertragungshebel 4.31 anstelle der gemeinsamen Kurbelachsen direkt der verstellbaren Kurbel 4.18 zugeleitet werden.

Die Wirkungsweise der siebenten Variante der Einrichtung (Fig. 9) entspricht der der dritten Variante (Fig. 5), wobei eine spezielle Verstelleinrichtung 4.22 für die Kurbelachse 4.15 vorgesehen ist. Diese Verstelleinrichtung 4.22 überträgt von der Welle 4.23 über eine Substeuernocke 4.27 entsprechend ihrer Steuerkurve eine Schwenkbewegung auf die Kurbelachse 4.15, wobei diese einerseits mit der wahlweisen Anlage von einer der Abgriffsrollen 4.28A oder 4.28B und/oder mit der Wahl verschiedener Schwenkachsen 4.30A bzw. 4.30B der Uebertragungswippe 4.29 nach Richtung bzw. Grösse variiert werden kann. Dabei sorgt die federelastische Einstelleinrichtung 4.32 für eine satte Anlage der jeweiligen Abgriffsrolle 4.28A oder 4.28B an der Substeuernocke 4.27.

Bei der achten Variante (Fig. 10) der Einrichtung 4 ist der grundsätzliche Aufbau nach der dritten Variante (Fig. 5) gewählt, wobei als Verstelleinrichtung 4.22 für die Kurbelachsen 4.15 oder 4.16 eine Substeuernocke 4.27 auf der Welle 4.23 angeordnet ist und mit zwei Abgriffsrollen 4.28A bzw. 4.28B zusammenwirkt, welche in einer, einen im wesentlichen einteiligen Wippenkörper aufweisenden, Uebertragungswippe 4.29 gelagert sind. Diese ist mit der gemeinsamen Kurbelachse 4.15 oder 4.16 drehfest verbunden und überträgt die der Steuerkurve der Substeuernocke 4.27 entsprechende Bewegung auf die Kurbelachse 4.15 oder 4.16. Dadurch werden die Drehachsen der beiden Kniehebel 4.1 bzw. 4.2 gegeneinander verlagert, wodurch eine Veränderung der Bearbeitungslinie bzw. der Rückhublinie und somit der Flankenlinie erfolgt. Die Uebertragungswippe 4.29 ist mit einer federbelasteten Einstelleinrichtung 4.32 in Wirkverbindung, welche die Anlage entweder der einen Abgriffsrolle 4.28A oder der anderen Abgriffsrolle 4.28B bewirkt. Je nachdem, welche der Abgriffsrollen anliegt, erfolgt die Ueberlagerungssteuerung für ein Innen- oder Aussenprofil auf dem Werkstück.

Insbesondere kann es vorteilhaft sein, die verschiedenen Baugruppen aus den unterschiedlichen Ausführungsformen ge eignet miteinander zu kombinieren.

Die Wirkungsweise der achten Variante der erfindungsgemässen Einrichtung (Fig. 10) entspricht im wesentlichen der der siebenten Variante (Fig. 9), wobei nur entsprechend dem einfacheren Aufbau der Verstelleinrichtung 4.22 mit dieser wohl die Richtung, nicht aber die Grösse der Verschwenkbewegung der Doppelkurbelachse 1. Art 4.15 variiert werden kann, da die Drehachse der Uebertragungswippe 4.29 mit der Doppelkurbelachse zusammenfällt. Die Richtung der Verschwenkung bei einer gleichen Substeuernocke 4.27 wird mit der Wahl einer der Abgriffsrollen 4.28A oder 4.28B eingestellt und die Grösse der Verschwenkung wird von der Steuerkurve der Substeuernocke 4.27 bestimmt.

## Patentansprüche

1. Einrichtung an einer Zahnradstoßmaschine zur Steuerung der Stellung des Schneidrades in Abhängigkeit von dessen Hubposition gegenüber dem von einem Aufspanntisch aufgenommenen Werkstück mit einem mit der Hubbewegung des Schneidrades angetriebenen Steuergetriebe mit einer Abheberolle, deren Bewegung auf einen das Schneidrad führenden Werkzeugträgerkopf übertragen wird, dadurch gekennzeichnet, daß das Steuergetriebe ein Kniehebelgetriebe (4.12, 4.2) umfaßt, dessen einer Hebel (4.1) am Werkzeugträgerkopf (1) angelenkt und dessen anderer Hebel (4.2) mit seinem freien Ende an einer Getriebeachse (4.4) gelagert ist, die mittels einer Verstelleinrichtung (4.11, 4.31) zur Verstellung der Abheberichtung, der Abhebegröße und/oder des Verlaufs der Bearbeitungslinie verlagerbar ist, und daß die Abheberolle (4.6) auf der Gelenkachse (4.13) des Kniehebelgetriebes (4) sitzt.

2. Einrichtung nach Anspruch 1, dadurch gekennzeichnet, daß die Verstelleinrichtung (4.3) einen Verstellbereich mit zwei symmetrisch zur neutralen Strecklage des Kniehebels (4.1, 4.2) liegenden Bereichen aufweist, wobei dem einen Bereich eine positive, dem anderen Bereich eine negative Zustellbewegung (x) und jede Einstellung in einem der Bereiche einem bestimmten Zustellweg entspricht.

3. Einrichtung nach Anspruch 1 oder 2, dadurch gekennzeichnet, daß die Abheberolle (4.6) auf der Gelenkachse (4.13, 4.14, 4.15, 4.16) des Kniehebelgetriebes (4) exzentrisch angeordnet ist.

4. Einrichtung nach einem der Ansprüche 1-3, dadurch gekennzeichnet, daß die Abheberolle (4.6) exzentrisch auf einem Abheberollenexzenter gelagert ist.

5. Einrichtung nach Anspruch 4, dadurch gekennzeichnet, daß der Abheberollenexzenter ein einstellbarer Abheberollenexzenter ist.

6. Einrichtung nach Anspruch 4 oder 5, dadurch gekennzeichnet, daß der einstellbare Abheberollenexzenter regel- oder steuerbar angetrieben ist.

7. Einrichtung nach einem der Ansprüche 1-3, dadurch gekennzeichnet, daß die Abheberolle (4.6) exzentrisch auf einer Kurbelachse (4.14) gelagert ist.

8. Einrichtung nach einem der Ansprüche 1-7, dadurch gekennzeichnet, daß die Anlenkung der beiden Hebel (4.1, 4.2) an der gemeinsamen Gelenkachse (4.15, 4.16) zueinander exzentrisch versetzt ist.

9. Einrichtung nach einem der Ansprüche 1-8, dadurch gekennzeichnet, daß die Exzentrität der Anordnung der Abheberolle (4.6) oder der Anlenkung der Hebelarme steuer- oder regelbr ist.

10. Einrichtung nach einem der Ansprüche 1-9, dadurch gekennzeichnet, daß die Verstelleinrichtung (4.3) eine in der Maschine gelagerte Kurbelwelle (4.3.1) ist, auf deren Kurbelzapfen die verlagerbare Getriebeachse (4.4) des Kniehebelgetriebes (4.1, 4.2) sitzt und die mit einem Steuermotor (4.5.1) und einer Fixiereinrichtung verbunden ist.

11. Einrichtung nach einem der Ansprüche 1-10, dadurch gekennzeichnet, daß die Verstelleinrichtung (4.3) eine motorgetriebene Spindel (4.11) aufweist, an deren Spindelmutter (4.12) der Hebel (4.2) mit der verlagerbaren Getriebeachse (4.4) angelenkt ist.

12. Einrichtung nach einem der Ansprüche 1-11, dadurch gekennzeichnet, daß das Steuergetriebe wenigstens eine mit der Hubbewegung des Schneidrades (2) drehangetriebene Steuerkurve (4.7) mit einer Werkzeugsteuerkurve aufweist, die mit der Abheberolle (4.6) auf der Gelenkachse (4.13) des Kniehebelgetriebes (4.1, 4.2) zusammenwirkt, und eine die Steuerkurve und die Abheberolle in ständigem Kontakt haltende Andrückvorrichtung aufweist.

13. Einrichtung nach einem der Ansprüche 1-12, dadurch gekennzeichnet, daß die Steuerkurve (4.7) außer einer Steuerkurve für die Schneidradabhebung auch eine dieser überlagerte Steuerkurve zur Erzeugung eines bestimmbaren Bearbeitungslinienverlaufes aufweist.

14. Einrichtung nach einem der Ansprüche 1-13, dadurch gekennzeichnet, daß die Steuerkurve (4.7) mit einer Werkzeugabhebesteuerkurve auf wenigstens einem verstellbaren Nockenexzenter zur von der Werkzeugabhebesteuerkurve getrennten Einstellung des Bearbeitungslinienverlaufes gelagert ist.

15. Einrichtung nach Anspruch 14, dadurch gekennzeichnet, daß der verstellbare Nockenexzenter mit einer Steuerantriebseinrichtung zur Führung des Schneidrades (2) entlang einer Bearbeitungslinie verbunden ist.

16. Einrichtung nach einem der Ansprüche 1-15, dadurch gekennzeichnet, daß die Steuerkurve (4.7) eine kreisförmige Steuerkurve für die Schneidradabhebung aufweist.

17. Einrichtung nach einem der Ansprüche 1-16, dadurch gekennzeichnet, daß bei mehreren Steuerkurven (4.7) diese und die Abheberolle (4.6) gegeneinander axial verstellbar und wechselweise zum Eingriff bringbar sind.

18. Einrichtung nach einem der Ansprüche 1-17, dadurch gekennzeichnet, daß die Steuerkurve (4.7) motorisch verstellbar ist.

19. Einrichtung nach Anspruch 17, dadurch gekennzeichnet, daß die Abheberolle (4.6) motorisch und steuerbar verstellbar ist.

20. Einrichtung nach einem der Ansprüche 1-19, dadurch gekennzeichnet, daß auf einer gemeinsamen Welle (4.23) eine Steuerkurve (4.7) und eine Substeuernocke (4.27) angeordnet sind, von welchen die Steuerkurve (4.7) mit der Abheberolle (4.6) und die Substeuernocke (4.27) mit einer Übertragungswippe (4.29) zusammenwirkt, wobei diese die von der Werkzeugsteuerkurve der Substeuernocke (4.27) abgegriffene Steuerbewegung auf das Kniehebelgetriebe (4) überträgt.

21. Einrichtung nach Anspruch 20, dadurch gekennzeichnet, daß die Übertragungswippe (4.29) einen im wesentlichen einteiligen Wippenkörper aufweist.

22. Einrichtung nach Anspruch 20, dadurch gekennzeichnet, daß die Übertragungswippe (4.29) einen im wesentlichen zweiteiligen Wippenkörper (4.29, 4.31) aufweist, dessen eines Teil wenigstens eine Abgriffsrolle (4.28A, 4.28B) trägt und dessen beide Teile miteinander koppelbar sind zur Übertragung der Steuerbewegung von der Substeuernocke (4.27) auf das Kniehebelgetriebe (4) und verschiedene Schwenkachsen (4.30A, 4.30B, 4.15) aufweisen, so daß die von der Steuerkurve (4.7) abgegriffene Steuerbewegung veränderbar ist.

23. Einrichtung nach Anspruch 22, dadurch gekennzeichnet, daß der die Abgriffsrollen (4.28A, 4.28B) tragende Wippenkörper wenigstens zwei wechselweise wirksame Schwenkachsen (4.30A, 4.30B) aufweist.

24. Einrichtung nach Anspruch 23, dadurch gekennzeichnet, daß die Lager für die Schwenkachsen (4.30A, 4.30B) lageverstellbar ausgebildet sind.

25. Einrichtung nach einem der Ansprüche 22-24, dadurch gekennzeichnet, daß eine Abgriffsrolle für die Abnahme der Steuerbewegung für konvexe Profile, die andere Abgriffsrolle für die Abnahme der Steuerbewegung für konkave Profile vorgesehen ist.

26. Einrichtung nach einem der Ansprüche 1-25, dadurch gekennzeichnet, daß zur Übertragung der Steuerbewegung des Kniehebelgetriebes (4) auf den Werkzeugträgerkopf (1) wenigstens ein an diesem gelagerter Steuerkurbelzapfen (4.18) vorgesehen ist, an dem der eine Kniehebel angreift.

27. Einrichtung nach einem der Ansprüche 1-26, dadurch gekennzeichnet, daß die Andrückeinrichtung (4.8) ein Andrückelement mit federelastischer Wirkung aufweist, das auf den mit dem Werkzeugträgerkopf verbundenen Hebel (4.2) gegen die Steuerkurve (4.7) wirkt.

28. Einrichtung nach Anspruch 27, dadurch gekennzeichnet, daß das Andrückelement eine Hydraulikeinrichtung ist.

29. Einrichtung nach einem der Ansprüche 1-28, dadurch gekennzeichnet, daß dem Kniehebelgetriebe (4) eine Einrichtung zur Spielunterdrückung im wesentlichen in Normalrichtung zur Bewegung des Werkzeugträgerkopfes (1) zugeordnet ist, welche einerseits am Werkzeugträgerkopf (1), andererseits an einem Gestellbauteil der Maschine angreift und in Abhängigkeit von der Zustellbewegung wirksam wird.

30. Einrichtung nach einem der Ansprüche 1-11, dadurch gekennzeichnet, daß dem Steuergetriebe ein auf die Abheberolle (4.6) wirkender regel- oder steuerbarer Hydraulikmotor- oder Elektromotorantrieb zur Erzeugung einer Werkzeugabhebung und/oder einer bestimmbaren Bearbeitungslinie des Schneidrades zugeordnet ist.

## Claims

1. Device on a gear shaper for controlling the position of the cutter as a function of its stroke position with respect to the workpiece received by a clamping table and having a control gear driven with the stroke movement of the cutter having a lifting roll, whose movement is transmitted to a tool carrier head guiding the cutter, characterized in that the control gear incorporates a toggle linkage (4.12, 4.2), whose one lever (4.1) is articulated to the tool carrier head (1) and whose other lever (4.2) is mounted with its free end on a gear spindle (4.4), which is displaceable by means of an adjusting device (4.11, 4.31) for adjusting the lifting direction, the lifting quantity arid/or the path of the machining line, and that the lifting roller (4.6) is located on the joint spindle (4.13) of the toggle linkage (4).

2. Device according to claim 1, characterized in that the adjusting device (1.3) has an adjusting range with two individual ranges positioned symmetrically to the neutral extended position of the toggle lever (4.1, 4.2), one range corresponding to a positive infeed and the other range to a negative infeed movement (x) and each setting in one of the ranges corresponds to a give infeed path.

3. Device according to claim 1 or 2, characterized in that the lifting roll (4.6) is eccentrically arranged on the joint spindle (4.13, 4.14, 4.15, 4.16) of the toggle linkage (4).

4. Device according to one of the claims 1 to 3, characterized in that the lifting roll is mounted eccentrically on a lifting roll eccentric.

5. Device according to claim 4, characterized in that the lifting roll eccentric is an adjustable lifting roll eccentric.

6. Device according to claim 4 or 5, characterized in that the adjustable lifting roll eccentric is driven in regulatable or controllable manner.

7. Device according to one of the claims 1 to 3, characterized in that the lifting roll (4.6) is eccentrically mounted on a crankspindle (4.14).

8. Device according to one of the claims 1 to 7, characterized in that the articulation of the two levers (4.1, 4.2) is reciprocally eccentrically displaced on the common joint spindle (4.15, 4.16).

9. Device according to one of the claims 1 to 8, characterized in that the eccentricity of the arrangement of the lifting roll (4.6) or the articulation of the lifting arms is controllable or regulatable.

10. Device according to one of the claims 1 to 9, characterized in that the adjusting device (4.3) has a crankshaft (4.3.1) mounted in the machine and on whose crankpin is located the displaceable gear spindle (4.4) of the toggle linkage (4.1, 4.2) and which is connected to a control motor (4.5.1) and a fixing device.

11. Device according to one of the claims 1 to 10, characterized in that the adjusting device (4.3) has a motor-driven spindle (4.11) on whose spindle nut (4.12) is articulated the lever (4.2) with the displaceable gear spindle ((4.4).

12. Device according to one of the claims 1 to 11, characterized in that the control gear has at least one control cam (4.7) driven in rotary manner with the lifting movement of the cutter (2) and having a tool control cam, which cooperates with the lifting roll (4.6) on the joint spindle (4.13) of the toggle linkage (4.1, 4.2) and a pressing device keeping the control cam and the lifting roll in constant contact.

13. Device according to one of the claims 1 to 12, characterized in that the control cam (4.7), besides a control cam for the cutter lifting, also has a control cam superimposed thereon for producing a determinable machining line configuration.

14. Device according to one of the claims 1 to 13, characterized in that the control cam (4.7) is mounted with a tool lifting control cam on at least one adjustable cam eccentric for the setting of the machining line configuration separate from the tool lifting control cam.

15. Device according to claim 14, characterized in that the adjustable cam eccentric is connected to a control drive device for guiding the cutter (2) along a machining line.

16. Device according to one of the claims 1 to 15, characterized in that the control cam (4.7) has a circular control cam for the cutter lifting.

17. Device according to one of the claims 1 to 16, characterized in that in the case of several control cams (4.7), the latter and the lifting roll (4.6) are axially adjustable against one another and can be alternately engaged.

18. Device according to one of the claims 1 to 17, characterized in that the control cam (4.7) is motor-adjustable.

19. Device according to claim 17, characterized in that the lifting roll (4.6) is adjustable in motor and controllable manner.

20. Device according to one of the claims 1 to 19, characterized in that on a common shaft (4.23) are arranged a control cam (4.7) and a subcontrol cam (4.27), whereof the control cam (4.7) cooperates with the lifting roll (4.6) and the subcontrol cam (4.27) with a transmission rocker (4.29), the latter transferring to the toggle linkage (4) the control movement tapped from the tool control cam of the subcontrol cam (4.27).

21. Device according to claim 20, characterized in that the transmission rocker (4.29) has a substantially one-piece rocker body.

22. Device according to claim 20, characterized in that the transmission rocker (4.29) has a substantially two-piece rocker body (4.29, 4.31), whose one part carries at least one tap roll (4.28A, 4.28B) and whose two parts can be coupled together for the transmission of the control movement from the subcontrol cam (4.27) to the toggle linkage (4) and have different pivot pins (4.30A, 4.30B, 4.15), so that the control movement tapped from the control cam (4.7) is variable.

23. Device according to claim 22, characterized in that the rocker body carrying the tap rolls (4.28A, 4.28B) has two alternately acting pivot pins (4.30A, 4.30B).

24. Device according to claim 23, characterized in that the bearings for the pivot pins (4.30A, 4.30B) are constructed in positionally adjustable manner.

25. Device according to one of the claims 22 to 24, characterized in that there is a tap roll for taking the control movement for convex profiles and another tap roll for taking the control movement for concave profiles.

26. Device according to one of the claims 1 to 25, characterized in that for transmitting the control movement of the toggle linkage (4) to the tool carrier head (1) there is at least one control crankshaft (4.18) mounted on the latter and on which acts one toggle lever.

27. Device according to one of the claims 1 to 26, characterized in that the pressing device (4.8) has a pressing element with spring elastic action, which acts on the lever (4.2) connected to the tool carrier head against the control cam (4.7).

28. Device according to claim 27, characterized in that the pressing element is a hydraulic device.

29. Device according to one of the claims 1 to 28, characterized in that with the toggle linkage (4) is associated a device for suppressing clearance in the normal direction to the movement of the tool carrier head (1), which on the one hand acts on the tool carrier head (1) and on the other on a frame component of the machine and acts as a function of the infeed.

30. Device according to one of the claims 1 to 11, characterized in that with the control gear is associated a regulatable or controllable hydraulic or electric motor drive acting on the lifting roll (4.6) for producing a tool lifting and/or a determinable machining line of the cutter.

## Revendications

1. Dispositif de mortaiseuse à tailler les engrenages par développante pour la commande en position de l'outil-pignon en fonction de sa position de levage par rapport à la pièce à usiner maintenue dans une table de fixation, ce dispositif présentant un mécanisme de commande, actionné par le mouvement de levage de l'outil-pignon, comprenant un galet de soulèvement dont le mouvement est transmis à une tête porte-outil qui conduit l'outil-pignon, caractérisé en ce que le mécanisme de commande comprend un mécanisme à levier coudé (4.12,4.2) dont un bras (4.1) est articulé sur la tête porte-outil (1) et l'autre bras (4.2) est monté pivotant par son extrémité libre sur un axe d'actionnement (4.4) déplaçable au moyen d'un dispositif de réglage (4.11,4.31) destiné à régler la direction du soulèvement, le niveau du soulèvement et/ou le tracé de la ligne d'usinage, et en ce que le galet de soulèvement (4.6) est monté sur l'axe d'articulation (4.13) du mécanisme à levier coudé (4).

2. Dispositif selon la revendication 1, caractérisé en ce que le dispositif de réglage (4.3) présente un champ de réglage comprenant deux plages symétriques par rapport à la position d'alignement neutre du levier coudé (4.1,4.2), l'une des plages correspondant à un mouvement de positionnement (x) positif, et l'autre plage à un mouvement de positionnement (x) négatif, et en ce que chaque position de réglage sur l'une des plages correspond à une distance de positionnement déterminée.

3. Dispositif selon l'une des revendications 1 ou 2, caractérisé en ce que le galet de soulèvement (4.6) est disposé de manière excentrée sur l'axe d'articulation (4.13,4.14,4.15,4.16) du mécanisme à levier coudé (4).

4. Dispositif selon l'une des revendications 1 à 3, caractérisé en ce que le galet de soulèvement (4.6) est monté à rotation de manière excentrée sur un excentreur du galet de soulèvement.

5. Dispositif selon la revendication 4, caractérisé en ce que l'excentreur du galet de soulèvement est réglable.

6. Dispositif selon l'une des revendications 4 ou 5, caractérisé en ce que l'excentreur du galet de soulèvement réglable est entraîné de façon régulée ou commandée.

7. Dispositif selon l'une des revendications 1 à 3, caractérisé en ce que le galet de soulèvement (4.6) est monté à rotation sur un vilebrequin (4.14).

8. Dispositif selon l'une des revendications 1 à 7, caractérisé en ce que les articulations des deux bras de levier (4.1,4.2) sur l'axe d'articulation commun (4.15,4.16) sont en positions décalées et excentrées l'une par rapport à l'autre.

9. Dispositif selon l'une des revendications 1 à 8, caractérisé en ce que la disposition excentrique du galet de soulèvement (4.6) ou l'articulation excentrique des bras de levier peuvent être régulées ou commandées.

10. Dispositif selon l'une des revendications 1 à 9, caractérisé en ce que le dispositif de réglage (4.3) est un vilebrequin (4.3.1) monté sur papier dans la machine, sur le maneton duquel l'axe d'actionnement déplaçable (4.4) du mécanisme à levier coudé (4.1,4.2) est monté, et qui est relié à un moteur de commande (4.5.1) et un dispositif de fixation.

11. Dispositif selon l'une des revendications 1 à 10, caractérisé en ce que le dispositif de réglage (4.3) présente un arbre fileté (4.11) entraîné par moteur, sur l'écrou associé (4.12) duquel le bras (4.12) est articulé par l'intermédiaire de l'axe d'actionnement déplaçable (4.4).

12. Dispositif selon l'une des revendications 1 à 11, caractérisé en ce que le mécanisme de commande comprend au moins une came de commande (4.7) entraînée en rotation avec le mouvement d'élévation de l'outil-pignon (2), cette came présentant un profil de came de commande d'outil qui coopère avec le galet de soulèvement (4.6) disposé sur l'axe d'articulation (4.13) du mécanisme à levier coudé (4.1,4.2), et comprend également un dispositif de pression maintenant la came de commande et le galet de soulèvement en contact permanent.

13. Dispositif selon l'une des revendications 1 à 12, caractérisé en ce que la came de commande (4.7) présente également, outre un profil de came de commande pour le soulèvement de l'outil-pignon, un profil de came de commande superposé au précédent de façon à pouvoir déterminer le tracé de la ligne d'usinage.

14. Dispositif selon l'une des revendications 1 à 13, caractérisé en ce que la came de commande (4.7) présentant un profil de came de commande de soulèvement d'outil est montée à rotation sur au moins un excentreur à came réglable pour permettre un réglage du tracé de la ligne d'usinage indépendant de la section en came de commande de soulèvement d'outil.

15. Dispositif selon la revendication 14, caractérisé en ce que l'excentreur à came réglable est relié à un dispositif d'entraînement de commande pour guider l'outil-pignon (2) le long de la ligne d'usinage.

16. Dispositif selon l'une des revendications 1 à 15, caractérisé en ce que la came de commande (4.7) présente un profil de came de commande circulaire pour le soulèvement de l'outil-pignon.

17. Dispositif selon l'une des revendications 1 à 16, caractérisé en ce qu'en cas de pluralité de cames de commande (4.7) et en ce que celles-ci et le galet de soulèvement (4.6) sont réglables axialement les uns par rapport aux autres et peuvent être amenés alternativement en contact d'engagement.

18. Dispositif selon l'une des revendications 1 à 17, caractérisé en ce que la came de commande (4.7) est réglable de façon motorisée.

19. Dispositif selon la revendication 17, caractérisé en ce que le galet de soulèvement (4.6) est réglable de façon motorisée et commandée.

20. Dispositif selon l'une des revendications 1 à 19, caractérisé en ce qu'une came de commande (4.7) et une came de transmission de commande (4.27) sont disposées sur un arbre (4.23) commun, la came de commande (4.7) coopérant avec le galet de soulèvement (4.6) et la came de transmission de commande (4.27) avec une bascule de transmission (4.29), qui transmet au mécanisme à levier coudé (4) le mouvement de commande imprimé à la came de transmission de commande (4.27) par le profil de came de commande d'outil.

21. Dispositif selon la revendication 20, caractérisé en ce que la bascule de transmission (4.29) présente un corps formé essentiellement d'une seule pièce.

22. Dispositif selon la revendication 20, caractérisé en ce que la bascule de transmission (4.29) présente un corps formé essentiellement de deux parties (4.29, 4.31), dont l'une porte au moins un galet de transmission (4.28A, 4.28B), les deux parties pouvant être accouplées l'une à l'autre pour la transmission au mécanisme à levier coudé (4) du mouvement de commande de la came de transmission de commande (4.27), et présentant des axes de basculement différents (4.30A, 4.30B), de telle sorte que le mouvement de commande provenant de la came de commande (4.7) soit modifiable.

23. Dispositif selon la revendication 22, caractérisé en ce que le corps de la bascule portant les galets de transmission (4.28A,4.28B) présente au moins deux axes de basculement qui sont activés alternativement.

24. Dispositif selon la revendication 23, caractérisé en ce que les paliers pour les axes de basculement (4.30A,4.30B) sont réglables en position.

25. Dispositif selon l'une des revendications 22 à 24, caractérisé en ce que l'un des galets de transmission est destiné à la transmission du mouvement de commande pour des profils convexes, et l'autre à la transmission du mouvement de commande pour des profils concaves.

26. Dispositif selon l'une des revendications 1 à 25, caractérisé en ce qu'il est prévu au moins un maneton de manivelle de commande (4.18) monté à rotation sur la tête porte-outil (1) pour la transmission à ladite tête (1) du mouvement de commande du mécanisme à levier coudé, un des bras de levier coudé étant monté sur ce maneton de manivelle.

27. Dispositif selon l'une des revendications 1 à 26, caractérisé en ce que le dispositif de pression (4.8) présente un élément de pression élastique, qui agit sur le bras (4.2) relié à la tête porte-outil (1) contre la came de commande (4.7).

28. Dispositif selon la revendication 27, caractérisé en ce que l'élément de pression est un dispositif hydraulique.

29. Dispositif selon l'une des revendications 1 à 28, caractérisé en ce qu'un dispositif de réduction du jeu est associé au mécanisme à levier coudé (4), essentiellement dans la direction perpendiculaire au mouvement de la tête porte-outil (1), ce dispositif étant monté d'une part sur la tête porte-outil (1) et d'autre part sur un élément constructif du bâti de la machine, et agit en fonction du mouvement de positionnement.

30. Dispositif selon l'une des revendications 1 à 11, caractérisé en ce qu'un entraînement par moteur hydraulique ou électrique agissant de façon régulée ou commandée sur le galet de transmission (4.6) est associé au mécanisme de commande pour permettre le soulèvement de l'outil et/ou la détermination du tracé d'usinage de l'outil-pignon.
